# EUROPÄISCHE PATENTANMELDUNG

(11) **EP 4 578 289 A1**
(43) Veröffentlichungstag der Anmeldung: **02.07.2025**
(21) Anmeldenummer: 24220681.1
(22) Anmeldetag: 17.12.2024
(51) Int. Cl.: A22C 11/10, A22C 15/00

(54) **VERFAHREN UND VORRICHTUNG ZUM BEREITSTELLEN VON PORTIONEN AUS PASTÖSER LEBENSMITTEL- MASSE, INSBESONDERE WÜRSTCHEN**

(30) Priorität: 18.12.2023 DE 102023135657
(71) Anmelder: VEMAG Maschinenbau GmbH, 27283 Verden/Aller (DE)
(72) Erfinder: Otten, Manuel, 27308 Kirchlinteln (DE)
(74) Vertreter: Eisenführ Speiser

(57) **Zusammenfassung**

Die Erfindung betrifft ein Verfahren und eine Vorrichtung zum Bereitstellen von Portionen aus in einer Hülle bereitgestellter pastöser Lebensmittel-Masse, insbesondere Würstchen-Portionen, bei dem/der
a) mittels eines Portioniergerätes (4) mit Abteilbändern (20, 22) Portionen (P) aus in einer Hülle befindlicher pastöser Lebensmittel-Masse bereitgestellt werden, welches einen Abteilband-Antrieb (24) und ein mittels eines Antriebs (18) antreibbares, rotierbares Looper-Rohr (16) aufweist, welches durch die Rotation verschiedene Orbitpositionen einnehmen kann,
b) die Portionen (P) mittels des Looper-Rohres (16) des Portioniergeräts (4) übergeben werden an Haken (14) einer Aufhängemaschine (6),
c) nach Übergabe von Portionen (P) die Haken (14) weiter transportiert werden. Erfindungsgemäß werden mittels einer Steuerung (30) mindestens der Antrieb (8) der Aufhängemaschine (6) und/oder Antrieb (18) des Looper-Rohrs (16) und/oder ein Abteilband-Antrieb (24) des Portioniergerätes (4) so angesteuert, dass von dem Portioniergerät (4) mittels des Looper-Rohrs (16) eine definierte Zahl (N) von Portionen (P) an einen letzten Haken (14) der Aufhängemaschine (6) am Ende einer Produktionsphase übergeben wird.

## Beschreibung

Die vorliegende Erfindung betrifft ein Verfahren nach dem Oberbegriff des Anspruchs 1, d.h. ein Verfahren zum Bereitstellen von Portionen aus in einer Hülle bereitgestellter pastöser Lebensmittel-Masse, insbesondere Würstchen-Portionen, bei dem
a) mittels eines Portioniergerätes mit Abteilbändern Portionen aus in einer Hülle befindlicher pastöser Lebensmittel-Masse bereitgestellt werden, welches einen Abteilband-Antrieb und ein mittels eines Antriebs antreibbares Looper-Rohr aufweist, welches durch die Rotation verschiedene Orbitpositionen einnehmen kann,
b) die Portionen mittels des Looper-Rohres des Portioniergeräts übergeben werden an Haken einer Aufhängemaschine und
c) nach Übergabe von Portionen die Haken weiter transportiert werden.

Die Erfindung betrifft ferner eine Vorrichtung nach dem Oberbegriff des Anspruchs 9, d.h. eine Vorrichtung zum Bereitstellen von Portionen aus in einer Hülle bereitgestellter pastöser Lebensmittel-Masse, insbesondere Würstchen-Portionen,
a) einem Portioniergerät zum Bereitstellen von Portionen aus in einer Hülle befindlicher pastöser Lebensmittel-Masse, welches Abteilbänder und einen Abteilband-Antrieb und ein mittels eines Antriebs antreibbares Looper-Rohr aufweist, welches durch die Rotation verschiedene Orbitpositionen einnehmen kann und dazu ausgebildet ist, mehrere durch die Hülle miteinander verbundene Portionen an eine Aufhängemaschine zu übergeben,
b) einer Aufhängemaschine zum Transportieren von mehreren Portionen, die mehrere Haken aufweist zum Aufnehmen mehrerer durch die Hülle verbundener Portionen, wobei die Haken mittels mindestens eines umlaufenden mittels eines Antriebs antreibbaren Antriebselements weiter transportiert werden können, und
c) einer Steuerung zum Steuern von Komponenten der Vorrichtung.

Derartige Verfahren und Vorrichtungen werden im Stand der Technik beispielsweise von der Anmelderin VEMAG im Rahmen einer Produktionslinie für Würstchen in Form von Wurstketten bereitgestellt, wobei ein Würstchen der Kette eine Portion bildet. Bei einer solchen Würstchen-Produktionslinie wird das pastöse Wurst-Brät von einer Füllmaschine bereitgestellt, in die Hülle aus Natur- oder Kunstdarm gefüllt und in einzelne Würstchen-Portionen durch Abdrehungen unterteilt. Ein Portioniergerät mit Abteilbändern stellt die eine Wurstkette bildenden Würstchenportionen in gewünschten Längen und Gewichten bereit und transportiert diese weiter zu einer Aufhängemaschine, wo die Wurstketten in verschiedenen Hängemustern gruppiert übergeben und aufgehängt werden. So können beispielsweise eine bestimmte Zahl von Würstchen an einen (von mehreren) Haken der Aufhängemaschine übergeben werden, sodass dann eine Schlaufe aus Würsten von dem Haken herunterhängt. Nach Übergabe einer kompletten Wurstkette im Rahmen einer Produktionsphase wird diese dann von der Aufhängemaschine abgenommen, beispielsweise mit einem Rauchstock, und kann dann weiterverarbeitet werden, beispielsweise geräuchert, gekocht oder dergleichen.

Bei bestimmten Applikationen, wie beispielsweise aus EP 3 878 284 A1 oder US 5,921,857 bekannt, werden die Würstchen von dem Portioniergerät an einer Übergabestelle mittels eines Loopers oder Looper-Rohres an die Aufhängemaschine übergeben. Das Looper-Rohr wird mittels einer Antriebseinheit rotiert und steht in einem Winkel relativ zu der Drehachse ab, so dass es durch Rotation verschiedene Orbitpositionen einnehmen kann, und weist einen inneren Hohlraum auf, durch welchen die Würstchen der Wurstkette in Richtung Aufhängemaschine transportiert werden. Durch veränderbare Steuerung des Antriebs des Loopers und auch der Antriebe des Portioniergerätes und/oder der Aufhängemaschine kann so mithilfe des Loopers die Wurstkette an Haken der Aufhängemaschine übergeben und dabei die Zahl der Würste, die an einen Haken übergeben werden, variiert werden.

Die Produktion mit einer derartigen Linie erfolgt in mehreren Produktionsphasen. Nach Vorbereitung der Linie beginnt die Produktion, die Antriebe laufen an und eine separate Wurstkette mit einer Vielzahl von Würstchen wird gefüllt, abgedreht, portioniert und aufgehängt. Eine Produktionsphase wird insoweit insbesondere durch eine zusammenhängende Hülle aus einem Natur- oder Kunstdarm mit einer bestimmten Länge definiert. Ist insoweit eine Wurstkette hergestellt worden, wird die Produktionsphase beendet. Nach Unterbrechung und Bereitstellen einer neuen Hülle kann die nächste Produktionsphase beginnen. Während einer Produktionsphase findet im Wesentlichen eine kontinuierliche Befüllung, Portionierung und Aufhängung an der Aufhängemaschine statt.

Besonderes Augenmerk beim Betreiben der in Rede stehenden Vorrichtung bzw. des Verfahrens bedarf der Beginn und das Ende einer Produktionsphase. Zu Beginn wird nach entsprechender Befüllung und Portionierung und Übergabe mittels des Loopers die Wurstkette an den ersten Haken der jeweiligen Produktionsphase übergeben. Was den letzten Haken einer Produktionsphase betrifft, ist in der Praxis beobachtet worden, dass häufig zu viele oder zu wenige Würstchen-Portionen an den letzten Haken (einer Produktionsphase) der Aufhängemaschine übergeben werden. Werden zu viele Würstchen an den letzten Haken übergeben, kann es in unerwünschter Weise dazu kommen, dass die zuvor vom Portioniergerät generierten Abdrehungen an einer Abdrehstelle zwischen zwei Portionen wieder ausdrehen, während sie vom letzten Haken herabhängen. Dies hängt damit zusammen, dass an der Abdrehstelle aufgrund der Elastizität des Darmes ein gewisses Rückdrehmoment wirken kann. Eine derartige (Rück-) Ausdrehung stört den Produktionsprozess und kann zum Unterbrechen der Produktionsphase führen. Werden zu wenig Würstchen an den letzten Haken übergeben, können diese vom Haken herabfallen, zumal die Schwerkraft bei zu wenigen Würstchen nicht zu einem ausreichend starken Herunterziehen der herabhängenden Wurstkette führt. So können dann Würstchen-Portionen auf den Boden fallen und werden unbrauchbar. Auch hier wird der Produktionsprozess, die jeweilige Produktionsphase, unerwünscht unterbrochen. Zuweilen versuchen Bediener der Linie erste Portionen mit der Hand zu fangen, was allerdings mit einem gewissen Risiko einhergeht und nicht unbedingt zuverlässig ist.

Aufgabe der vorliegenden Erfindung ist es, ein Verfahren und eine Vorrichtung zum Bereitstellen von insbesondere Würstchen-Portionen in einer Hülle anzugeben, bei denen die beschriebenen Nachteile weitgehend vermieden werden und insbesondere eine Produktionsphase zuverlässig beendet werden kann.

Die Erfindung löst die Aufgabe bei einem Verfahren der eingangs genannten Art dadurch, dass mittels einer Steuerung mindestens der Antrieb der Aufhängemaschine und/oder Antrieb des Looper-Rohrs und/oder ein Abteilband-Antrieb des Portioniergerätes so angesteuert werden, dass von dem Portioniergerät mittels des Looper-Rohrs eine definierte Zahl von Portionen an einen letzten Haken der Aufhängemaschine am Ende einer Produktionsphase übergeben wird.

Die Erfindung löst die Aufgabe ferner bei einer Vorrichtung der eingangs genannten Art dadurch, dass die Steuerung so ausgebildet und eingerichtet ist, dass mittels der Steuerung mindestens der Antrieb der Aufhängemaschine und/oder Antrieb des Looper-Rohr und/oder ein Abteilband-Antrieb des Portioniergerätes so gesteuert werden, dass von dem Portioniergerät mittels des Looper-Rohrs eine definierte Zahl von Portionen an einen letzten Haken der Aufhängemaschine zu Ende einer Produktionsphase übergeben wird.

Mittels der erfindungsgemäßen Vorrichtung bzw. des Verfahrens wird durch entsprechende Einrichtung der Steuerung erreicht, dass die Antriebe der Aufhängemaschine und/oder des Loopers und/oder des Abteilbandes des Portioniergerätes gezielt so angesteuert werden, dass eine definierte Zahl von (Würstchen-) Portionen an einen letzten Haken zum Ende einer Produktionsphase übergeben wird. Dazu wird die Steuerung entsprechend eingerichtet, nämlich softwareseitig so eingerichtet und implementiert, dass die gewünschte definierte Zahl von Portionen an den letzten Haken übergeben werden kann; dabei ist es besonders bevorzugt, dass 2 Portionen an den letzten Haken übergeben werden. Dadurch wird erfindungsgemäß erreicht, dass nicht zu viele oder zu wenige Portionen an den letzten Haken einer Promotionsphase übergeben werden. Dadurch kann erreicht werden, dass von dem letzten Haken ausreichende Portionen, vorzugsweise 2 Portionen, mit einem erforderlichen Gewicht herabhängen, sodass kein unerwünschtes Ausdrehen erfolgt, aber auch ein Herabfallen von zu wenigen herabhängenden Würstchen vom letzten Haken verhindert wird. Die Erfindung erreicht in Folge dessen, dass eine Produktionsphase durch zuverlässige Übergabe einer definierten gewünschten Portion an den letzten Haken einer Produktionsphase erfolgt und somit insoweit keine Schwierigkeiten entstehen und die Produktionsphase zuverlässig beendet werden kann.

Gemäß einer bevorzugten Ausführungsform wird vorgeschlagen, dass die Steuerung so ausgebildet und eingerichtet ist, dass die Berechnung der Geschwindigkeit der Abteilbänder in Relation zur Looper-Orbitposition und in Abhängigkeit der Portionslänge und des Weges so durch die Steuerung angepasst wird, dass 2 Portionen an den letzten Haken (14) am Ende einer Produktionsphase übergeben werden. Durch entsprechende Einrichtung der Steuerung kann sichergestellt werden, dass die jeweils gewünschte definierte Zahl von insbesondere 2-3, besonders bevorzugt 2 Portionen an den letzten Haken einer Produktionsphase übergeben werden. Durch Eingabe von Parametern kann die Steuerung so individuell von einem Bediener entsprechend verändert und eingestellt werden.

Besonders bevorzugt ist es ferner, dass die Steuerung so ausgebildet und eingerichtet ist, dass die Berechnung der Geschwindigkeit der Abteilbänder in Relation zur Looper-Orbitposition und in Abhängigkeit der Portionslänge und des Weges so durch die Steuerung angepasst wird, dass 2 Portionen an den letzten Haken am Ende einer Produktionsphase übergeben werden. Aus der Looper-Orbit-Position ergibt sich, wie viele Würste bis zum kommenden Haken gehangen werden sollen. Das Verhältnis dieser beiden Werte zueinander bestimmt dann die Bandgeschwindigkeit des Portioniergerätes, sodass der Looper sowie die kontinuierliche Kette der Aufhängemaschine mit konstantem Tempo weiterfahren können. Es ist erfindungsgemäß bevorzugt, die Steuerung so eingerichtet ist, dass die aktuelle Orbit-Position des Looper-Rohres zu einem bestimmten Zeitpunkt oder einer Vielzahl von Zeitpunkten bestimmt werden kann, und dass eine Schlaufe zwischen dem vorletzten und letzten Haken der Produktionsphase mittels der Steuerung verringert wird.

Gemäß einer bevorzugten Weiterbildung wird vorgeschlagen, dass die Zahl in Abhängigkeit von dem Weg (W) von einem Abgaberohr einer Füllmaschine zum Bereitstellen der Lebensmittel-Masse bis zum relativ zum Looper-Rohr dichtesten Haken der Aufhängemaschine bestimmt wird. Es hat sich gezeigt, dass dieser Weg vom Produktrohrauslass, d. h. dem Abgaberohr der Füllmaschine, bis zur Hakenkehle des dichtesten Hakens softwareseitig implementiert und bestimmt werden kann. Aus dem Weg ergibt sich die Zahl der Portionen, die produziert werden sollen, ehe der Looper seine Rotation beginnt. Diese Zeitverzögerung ermöglicht es vorzugsweise, dass die gewünschte, eingestellte Portionszahl bei Positionierung des Loopers in lotrechter Stellung nach oben aus dem Auslass des Loopers herausgeführt werden, um sie in der gewünschten eingegebenen Zahl auf den Haken aufzuhängen. Demgemäß ergibt sich eine bestimmte Anzahl von Portionen rechnerisch in Abhängigkeit von dem genannten Weg.

Gemäß einer Weiterbildung der Erfindung ist vorgesehen, dass die Steuerung in Abhängigkeit von dem Weg und der Zahl der Portionen, die von dem Portioniergerät produziert wird, den Antrieb des Looper-Rohrs ansteuert, derart, dass eine bestimmte Zahl von Portionen von dem Looper-Rohr an einen Haken der Aufhängemaschine übergeben wird.

Besonders bevorzugt wird vorgesehen, dass die Steuerung ferner so eingerichtet ist, dass das Portioniergerät eine Zahl von mittels der Hülle zusammenhängenden Portionen produziert und an das Looper-Rohr so übergibt, dass die Zahl der Portionen dort gehalten wird und die Zahl der Portionen übergeben wird, während das Looper-Rohr im Wesentlichen in lotrechter Stellung nach unten weist, und dass dann anschließend von dem Looper Rohr die vorbestimmte Zahl von Portionen von dem Looper-Rohr an einen Haken , insbesondere einen ersten Haken einer Produktionsphase übergeben wird, um die definierte Zahl von Portionen an diesen Haken aufzuhängen.

Zweckmäßigerweise wird vorgesehen, dass die Steuerung mindestens einen Prozessor, Speicher, Software, eine Bedienungseinrichtung und ein Display aufweist und die Steuerung so eingerichtet ist, dass in die gespeicherte Software der Steuerung von einem Bediener mittels der Bedienungseinrichtung oder über eine elektrische Schnittstelle der Parameterzahl von Portionen für einen Haken, insbesondere letzten Haken eingegeben wird.

Die beschriebenen Effekte und Vorteile beziehen sich sowohl auf das erfindungsgemäße Verfahren als auch die erfindungsgemäße Vorrichtung. Die Vorrichtung wird vorteilhaft dadurch weitergebildet, dass das Portioniergerät zwei umlaufende, beabstandet zueinander angeordnete Abteilbänder und einen Abteilband-Antrieb aufweist und von einer ein dem Portioniergerät vorgeschalteten Füllmaschine mit einem Abgaberohr in einer Hülle befindliche Lebensmittel-Masse an das Portioniergerät übergeben werden kann, und, dass am Ausgangsbereich des Portioniergeräts das Looper-Rohr angeordnet ist, um Portionen in einer gewünschten Zahl pro Zeiteinheit und mit einem gewünschten Ziel-Gewicht an das Looper-Rohr übergeben zu können und, dass auslassseitig hinter dem Looper-Rohr die Haken der Aufhängemaschine so bewegt werden können, dass eine gewünschte Zahl von Portionen von dem Looper-Rohr auf Haken der Aufhängemaschine übergeben werden können.

Bevorzugt ist die Steuerung so ausgebildet, dass von einem Bediener mittels der Bedienungseinrichtung (36) oder über eine elektrische Schnittstelle der Betriebsmodus Restfang für den letzten Haken aktivierbar ist, so dass die Berechnung der Geschwindigkeit der Abteilbänder in Relation zur Looper-Orbitposition und in Abhängigkeit der Portionslänge und des Weges so durch die Steuerung angepasst wird, dass 2 Portionen an den letzten Haken am Ende einer Produktionsphase übergeben werden.

Die Erfindung ist nachstehend anhand von bevorzugten Ausführungsbeispielen der Vorrichtung und des Verfahrens anhand der Figuren beschrieben; es zeigen:
- Fig. 1: eine schematische Übersicht einer erfindungsgemäßen Vorrichtung zum Bereitstellen von Würstchen-Portionen mit Füllmaschine, Portioniergerät und Aufhängemaschine in einer schematischen Ansicht von der Seite;
- Fig. 2: eine Ansicht von oben in vergrößerter Darstellung auf Teile der Füllmaschine, des Portioniergerätes, eines Loopers und der Aufhängemaschine;
- Fig. 3: eine Ansicht von oben in vergrößerter Darstellung auf Teile der Füllmaschine, des Portioniergerätes, eines Loopers und der Aufhängemaschine mit einer eingetragenen Weg-Strecke vom Ende des Abgaberohres bis zur Hakenkehle;
- Fig. 4: eine Ansicht von oben in vergrößerter Darstellung auf Teile der Füllmaschine, des Portioniergerätes, eines Loopers und der Aufhängemaschine;
- Fig. 5: eine Seitenansicht von in vergrößerter Darstellung auf Teile der Füllmaschine, des Portioniergerätes, eines Loopers und der Aufhängemaschine;
- Fig. 6: eine perspektivische Ansicht von Teilen der Füllmaschine, des Portioniergerätes, des Loopers in einer bestimmten Orbital-Position und der Aufhängemaschine; und
- Fig. 7: eine schematische Darstellung der Steuerung und Antriebe der wesentlichen Komponenten und zur Veranschaulichung des erfindungsgemäßen Verfahrens.

Die in den Figuren gezeigte Vorrichtung 1 dient zum Bereitstellen von Portionen aus in einer Hülle bereitgestellter pastöser Lebensmittel-Masse, hier Würstchen-Portionen P in einer Wurstkette. Die Vorrichtung 1 ist ausgebildet zur Durchführung eines Verfahrens, welches nachfolgend weiter beschrieben ist, und ist Teil einer Produktions-Linie zur Herstellung von Würstchen-Portionen P, es könnten aber auch andere Lebensmittel zu Produkten verarbeitet werden.

Eine Füllmaschine 2 mit üblichem Fülltrichter zur Aufnahme von pastöser Lebensmittelmasse, hier Wurstbrät, weist eine nicht gezeigte Pumpe, Steuerung und ein Abgaberohr 464 zum Abgeben der Lebensmittelmasse in eine Hülle auf. Der Füllmaschine 2 ist nachgeschaltet ein Portioniergerät 4, mit dem die gefüllte Hülle an Abdrehstellen abgedreht werden kann, um so einzelne Würstchen-Portionen P in definierter Länge L und mit einem definierten Ziel-Gewicht G zu erzeugen, die eine Wurstkette bilden..

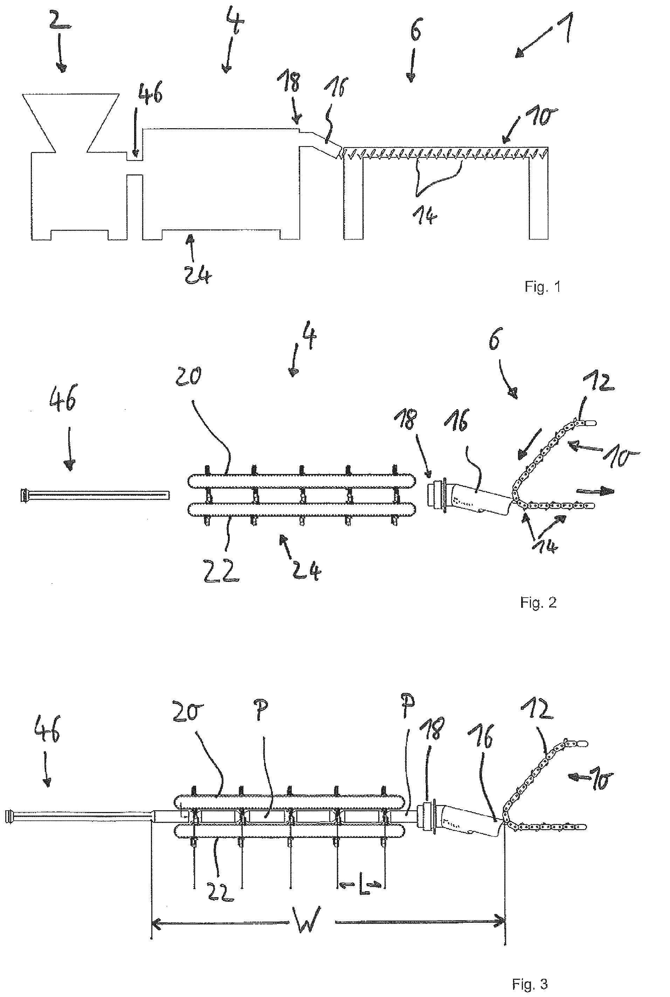

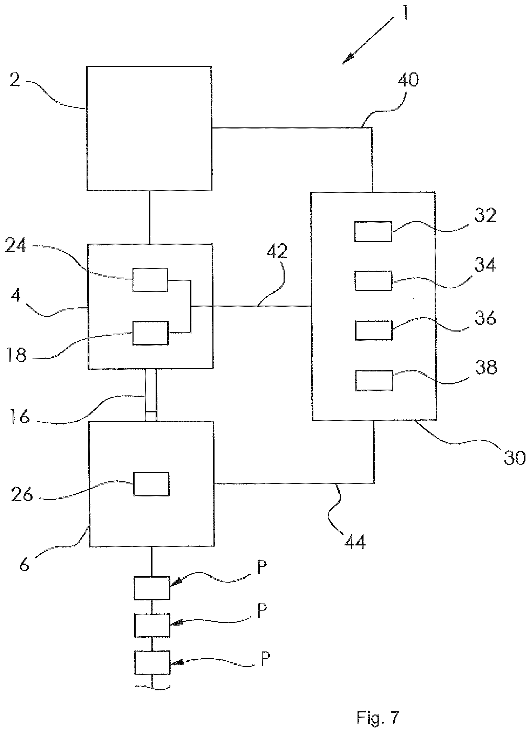

Das Portioniergerät 4 weist zwei in den Figuren 2,4 und 6 gezeigte, parallel zueinander angeordnete Abteilbänder 20, 22 und einen Abteilband-Antrieb 24, der schematisch in Figur 1 und 7 gezeigt ist, sowie ein mittels eines ebenfalls in Figur 7 gezeigten Antriebs 18 antreibbares Looper-Rohr 16 oder Looper 16 auf. Das winkelig abstehende Looper-Rohr 16 fährt mit seinem offenen End-Abschnitt zum Abgeben der Portionen P entlang einer Kreisbahn und ist in an sich bekannter Weise dazu ausgebildet, mehrere durch die Hülle miteinander verbundene Portionen P an eine Aufhängemaschine 6 zu übergeben. Durch die Rotierbarkeit und winklige Anordnung des Looper-16 durchläuft dieses auch mit seinem Endabschnitt umlaufende Orbitalpositionen, sodass von dem offenen Endabschnitt des Looper-Rohres 16 Würstchen-Portionen P an Haken 14 der Aufhängermaschine 6 übergeben werden können.

Die in den Figuren 1-6 gezeigte Aufhängemaschine 6 zum Transportieren von mehreren Portionen P hat eine Vielzahl von Haken 14 zum Aufnehmen mehrerer durch die Hülle verbundener Portionen P, indem eine Wurstkette an einer Abdrehstelle zwischen 2 Portionen P in der Kehle eines Hakens 14 aufgehängt wird. Die Haken 14 sind mittels mindestens eines durch einen Antrieb 26 (Figur 7) antreibbaren umlaufenden Antriebselements 10 bewegbar, um die Wurstkette transportieren zu können. Das Antriebselement 10 ist als umlaufende Kette 12 ausgebildet, vergleiche insbesondere Figuren 2,3, 4,5 und 6. Das Portioniergerät 4 im Beispiel weist zwei umlaufende, beabstandet zueinander angeordnete Abteilbänder 20, 22 und einen Abteilband-Antrieb 24 auf, vgl. Fig. 1, 2, 7. Das Antriebselement 10 ist als Kette 12 ausgebildet an dem der/die Haken 14 befestigt sind.

Wie die Figuren 1-6 zeigen, wird im Betrieb und Ablauf des Verfahrens von der dem Portioniergerät 4 vorgeschalteten Füllmaschine 2 durch das Abgaberohr 44 Lebensmittel-Masse gefördert und an das Portioniergerät 4 übergeben. Dort erfolgt mittels einer hier nicht gezeigten, den Fachleuten bekanntem Abdreh-Einheit eine Abdrehung und somit Portionierung in individuelle Portionen P, die eine Wurstkette bilden. Am Ausgangsbereich des Portioniergeräts 4 ist das rotierbare, hohle Looper-Rohr 16 angeordnet ist, welches verschiedene Orbitalpositionen durchlaufen kann und von welchem Portionen P in einer gewünschten Länge L, Zahl pro Zeiteinheit und mit einem gewünschten Ziel-Gewicht G an die Aufhängemaschine 6 übergeben werden können. Zu diesem Zweck sind Portioniergerät 4 mit dem Looper-Rohr 16 und Aufhängemaschine so relativ zueinander angeordnet, dass auslassseitig hinter dem Looper-Rohr 16 die Haken 14 der Aufhängemaschine 6 so bewegt werden können, dass eine gewünschte Zahl N von Portionen P von dem Looper-Rohr 16 auf Haken 14 der Aufhängemaschine 6 übergeben werden können.

Figur 7 veranschaulicht schematisch anhand eines Blockschaltbildes eine elektrische Steuerung 30 zum Steuern von Komponenten der Vorrichtung 1. Die Steuerung 30 weist mindestens einen Prozessor 32, Speicher 34, eine Bedienungseinrichtung 36 und ein Display 38 auf, sowie eine Software, die eingehende Signale, Eingaben der Bediener verarbeiten und Steuerungs-Signale an die Antriebe der Komponenten übermitteln kann.

Die Steuerung 30 ist hardware- und softwaremäßig so ausgebildet und eingerichtet, dass mittels der Steuerung 30 mindestens der Antrieb 26 (Fig. 7) der Aufhängemaschine 6 und/oder der Antrieb 18 des Looper-Rohrs 16 und/oder ein Abteilband-Antrieb 24 oder gegebenenfalls zwei diesbezügliche Antriebe 24 (Fig. 7) des Portioniergerätes 4 so gesteuert werden, dass von dem Portioniergerät 4 mittels des Looper-Rohrs 16 eine definierte Zahl N von Portionen P an einen ersten Haken 14 der Aufhängemaschine 6 zu Beginn einer Produktionsphase übergeben wird. Die Steuerung 30 ist ferner so eingerichtet ist, dass in die gespeicherte Software der Steuerung 30 von einem Bediener mittels der Bedienungseinrichtung 36 oder über eine elektrische Schnittstelle der Parameterzahl N von Portionen P für einen Haken 14, insbesondere ersten Haken 14 eingebbar ist.

Die Steuerung 30 ist insbesondere softwaremäßig eingerichtet, dass eine bestimmte Zahl von Portionen P an einen letzten Haken 14 einer Produktionsphase übergeben werden können, insbesondere 2-3 Portionen, besonders bevorzugt 2 Portionen an einen letzten Haken 14 einer Produktionsphase übergeben werden können.

Im Betrieb der Vorrichtung wird folgendes Verfahren ausgeführt:
Mittels des Portioniergerätes 4 mit den Abteilbändern 20, 22 werden die Portionen P bereitgestellt. Die in einer Wurstkette zusammenhängenden Portionen P werden mittels des Looper-Rohres 16 übergeben an die Haken 14 der Aufhängemaschine 6. Mittels der Steuerung 30 wird mindestens der Antrieb 26 der Aufhängemaschine 6 und/oder Antrieb 18 des Looper-Rohrs 16 und/oder ein Abteilband-Antrieb 24 des Portioniergerätes 4 so angesteuert dass von dem Portioniergerät 4 mittels des Looper-Rohrs 16 eine variable, definierte Zahl N von Portionen P an einen ersten Haken 14 der Aufhängemaschine 6 zu Beginn einer Produktionsphase übergeben wird. Die Steuerung 30 ist eingerichtet, dass die definierte Zahl N von Portionien P durch Eingriff in die Steuerung 30 verändert und eingestellt werden kann. Es ist möglich, dass die Zahl N in Abhängigkeit von dem Gewicht G einer Portion P oder mehreren Portionen P eingestellt wird.

Die Steuerung 30 ist insbesondere mit Blick auf den letzten Haken 14 einer Produktionsphase so ausgebildet und eingerichtet ist, dass mittels der Steuerung 30 mindestens der Antrieb 26 der Aufhängemaschine 6 und/oder Antrieb 18 des Looper-Rohrs 16 und/oder ein Abteilband-Antrieb 24 des Portioniergerätes 4 so gesteuert werden, dass von dem Portioniergerät 4 mittels des Looper-Rohrs 16 eine definierte Zahl N von vorzugsweise 2 Portionen P an einen letzten Haken 14 der Aufhängemaschine 6 zu Ende einer Produktionsphase übergeben wird.

Die Steuerung ist ferner so eingerichtet ist, dass durch die gespeicherte Software der Steuerung 30 von einem Bediener mittels der Bedienungseinrichtung (36) oder über eine elektrische Schnittstelle der Betriebsmodus "Restfang" für den letzten Haken aktivierbar ist, so dass die Berechnung der Geschwindigkeit der Abteilbänder in Relation zur Looper-Orbitposition und in Abhängigkeit der Portionslänge und des Weges so durch die Steuerung angepasst wird, dass 2 Portionen an den letzten Haken 14 am Ende einer Produktionsphase übergeben werden.

Wie Figur 3 veranschaulicht, ist die Zahl N in Abhängigkeit von dem Weg W von dem Abgaberohr 46 der Füllmaschine 2 bis zum relativ zum Looper-Rohr 16 dichtesten Haken 14 der Aufhängemaschine 6 bestimmt wird. Die aktuelle Orbit-Position des Looper-Rohres 16 kann zu einem bestimmten Zeitpunkt oder einer Vielzahl von Zeitpunkten bestimmt werden. Eine Schlaufe zwischen dem vorletzten und letzten Haken 14 der Produktionsphase kann mittels der Steuerung verringert werden.

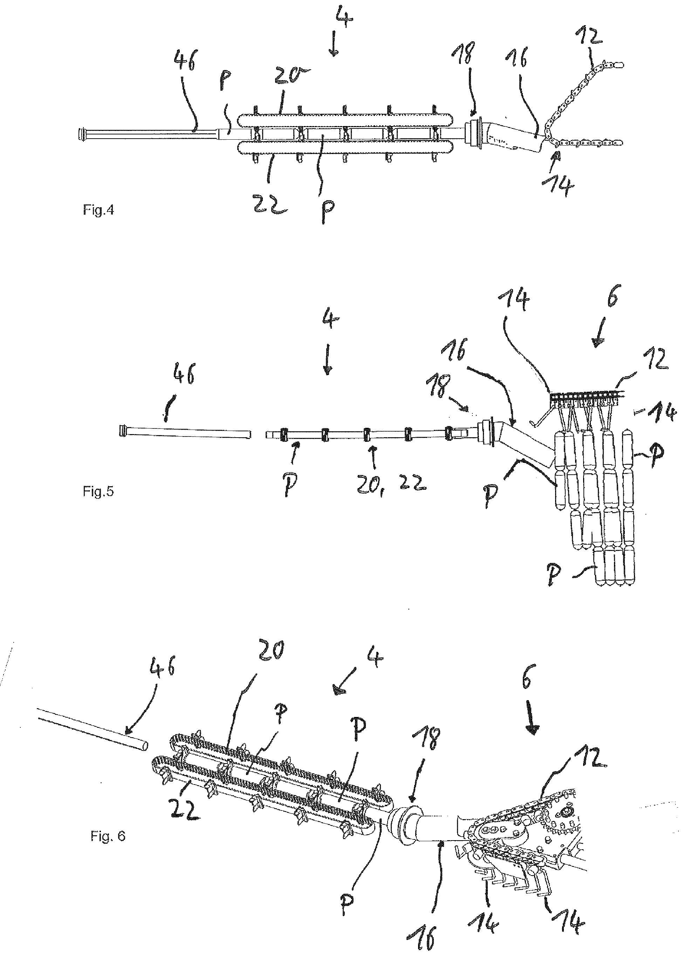

Figur 6 zeigt, wie das Looper-Rohr 16 in einer bestimmten Orbitalposition steht.

Die Anzahl der Portionen ist gleich der Wegstrecke geteilt durch die Länge der Würste (P=W/L). W und L sind in Figur 3 eingezeichnet.

Die Steuerung 30 steuert generell in Abhängigkeit von dem Weg W und der Zahl der Portionen P, die von dem Portioniergerät 4 produziert wird, den Antrieb des Looper-Rohrs 16 derart an, dass eine bestimmte Zahl von Portionen P von dem Looper-Rohr 16 an einen Haken 14 der Aufhängemaschine 6 übergeben wird.

Insbesondere wird das Verfahren so ausgeführt und ist die Steuerung 30 so eingerichtet, dass das Portioniergerät 4 eine Zahl von mittels der Hülle zusammenhängenden Portionen P produziert und an das Looper-Rohr 16 so übergibt, dass die Zahl der Portionen P dort gehalten wird und die Zahl der Portionen P übergeben wird, während das Looper-Rohr 16 im Wesentlichen in lotrechter Stellung nach unten weist. Dann anschließend wird von dem Looper Rohr 16 die vorbestimmte Zahl N von Portionen P von dem Looper-Rohr 16 an einen Haken 14, insbesondere einen ersten Haken 14 einer Produktionsphase übergeben, um die definierte Zahl N von Portionen P an diesen Haken 14 aufzuhängen. Nach Übergabe von Portionen P werden die Haken 14 durch die Aufhängemaschine 4 weiter transportiert. Je nach Bedarf wird in die Steuerung 30 von einem Bediener mittels der Bedienungseinrichtung 36 oder über eine elektrische Schnittstelle der Parameterzahl N von Portionen P für einen Haken 14, insbesondere ersten Haken 14 eingegeben. Die Steuerung 30 verarbeitet die eingegebenen Daten weiter und steuert entsprechend die Antriebe an. Variationen der Verfahrensweise sind ohne weiteres möglich.

Wie zuvor beschrieben, wird das Verfahren so ausgeführt und ist die Vorrichtung so ausgebildet, insbesondere die Steuerung 30, dass der letzte Haken 14 einer Produktionsphase mit wenigen, vorzugsweise zwei Portionen beaufschlagt wird, die dann als Ende als Schlaufe herabhängen und das Ende der Würstchen-Kette bilden. Die Produktionsphase ist dann abgeschlossen. Eine weitere Positionsphase kann dann beginnen zu einem gewünschten Zeitpunkt

### Bezugszeichenliste

- 1: Vorrichtung zum Bereitstellen von Portionen
- 2: Füllmaschine
- 4: Portioniergerät
- 6: Aufhängemaschine
- 8: Antrieb
- 10: Antriebselement
- 12: Kette
- 14: Haken
- 16: Looper-Rohr
- 18: Looper-Rohr-Antrieb
- 20: Abteilband
- 22: Abteilband
- 24: Abteilband-Antrieb
- 26: Aufhängemaschinen-Antrieb
- 30: Steuerung
- 32: Prozessor
- 34: Speicher
- 36: Bedienungseinrichtung
- 38: Display
- 40: Steuerungsleitung
- 42: Steuerungsleitung
- 44: Steuerungsleitung
- 46: Abgaberohr der Füllmaschine
- P: Portion
- L: Länge
- N: Zahl
- D: Zahl der Abdrehungen
- G: Gewicht der Portion
- W: Weg

## Patentansprüche

1. Verfahren zum Bereitstellen von Portionen aus in einer Hülle bereitgestellter pastöser Lebensmittel-Masse, insbesondere Würstchen-Portionen, bei dem
a) mittels eines Portioniergerätes (4) mit Abteilbändern (20, 22) Portionen (P) aus in einer Hülle befindlicher pastöser Lebensmittel-Masse bereitgestellt werden, welches einen Abteilband-Antrieb (24) und ein mittels eines Antriebs (18) antreibbares, rotierbares Looper-Rohr (16) aufweist, welches durch die Rotation verschiedene Orbitpositionen einnehmen kann,
b) die Portionen (P) mittels des Looper-Rohres (16) des Portioniergeräts (4) übergeben werden an Haken (14) einer Aufhängemaschine (6),
c) nach Übergabe von Portionen (P) die Haken (14) weiter transportiert werden, **dadurch gekennzeichnet, dass**
d) mittels einer Steuerung (30) mindestens der Antrieb (8) der Aufhängemaschine (6) und/oder Antrieb (18) des Looper-Rohrs (16) und/oder ein Abteilband-Antrieb (24) des Portioniergerätes (4) so angesteuert werden, dass von dem Portioniergerät (4) mittels des Looper-Rohrs (16) eine definierte Zahl (N) von Portionen (P) an einen letzten Haken (14) der Aufhängemaschine (6) am Ende einer Produktionsphase übergeben wird.

2. Verfahren nach Anspruch 1,
**dadurch gekennzeichnet, dass** die Steuerung (30) so ausgebildet und eingerichtet ist, dass die Berechnung der Geschwindigkeit der Abteilbänder in Relation zur Looper-Orbitposition und in Abhängigkeit der Portionslänge und des Weges so durch die Steuerung angepasst wird, dass 2 Portionen an den letzten Haken (14) am Ende einer Produktionsphase übergeben werden.

3. Verfahren nach mindestens einem der vorstehenden Ansprüche 1 und 2,
**dadurch gekennzeichnet, dass** die Steuerung (30) so eingerichtet ist, dass die aktuelle Orbit-Position des Looper-Rohres (16) zu einem bestimmten Zeitpunkt oder einer Vielzahl von Zeitpunkten bestimmt werden kann, und dass eine Schlaufe zwischen dem vorletzten und letzten Haken der Produktionsphase mittels der Steuerung verringert wird.

4. Verfahren nach mindestens einem der vorstehenden Ansprüche,
**dadurch gekennzeichnet, dass** die Zahl (N) in Abhängigkeit von dem Weg (W) von einem Abgaberohr (46) einer Füllmaschine (2) zum Bereitstellen der Lebensmittel-Masse bis zum relativ zum Looper-Rohr (16) dichtesten Haken (14) der Aufhängemaschine (6) bestimmt wird.

5. Verfahren nach Anspruch 4,
**dadurch gekennzeichnet, dass** die durch den Antrieb definierte Geschwindigkeit der Abteilbänder (20, 22) des Portioniergerätes (4) in Abhängigkeit von der Orbit-Position des Looper-Rohres (16) und/oder in Abhängigkeit von dem genannten Weg (W) berechnet wird, vorzugsweise derart, dass der Antrieb des Looper-Rohres (16) und der Antrieb der Aufhängemaschine (6) konstant weiterbetrieben werden können.

6. Verfahren nach Anspruch 4 und/oder 5,
**dadurch gekennzeichnet, dass** die Steuerung (30) in Abhängigkeit von dem Weg (W) und der Zahl der Portionen (P), die von dem Portioniergerät (4) produziert wird, den Antrieb des Looper-Rohrs (16) ansteuert, derart, dass eine bestimmte Zahl von Portionen (P) von dem Looper-Rohr (16) an einen Haken (14) der Aufhängemaschine (6) übergeben wird.

7. Verfahren nach mindestens einem der vorstehenden Ansprüche,
**dadurch gekennzeichnet, dass** die Steuerung (30) so eingerichtet ist,
- dass das Portioniergerät (4) eine Zahl von mittels der Hülle zusammenhängenden Portionen (P) produziert und an das Looper-Rohr (16) so übergibt, dass die Zahl der Portionen (P) dort gehalten wird und die Zahl der Portionen (P) übergeben wird, während das Looper-Rohr (16) im Wesentlichen in lotrechter Stellung nach unten weist,
- und dass dann anschließend von dem Looper Rohr (16) die vorbestimmte Zahl (N) von Portionen (P) von dem Looper-Rohr (16) an einen Haken (14), insbesondere einen letzten Haken (14) einer Produktionsphase übergeben wird, um die definierte Zahl (N) von Portionen (P) an diesen Haken (14) aufzuhängen.

8. Verfahren nach mindestens einem der vorstehenden Ansprüche,
**dadurch gekennzeichnet, dass** die Steuerung (30) mindestens einen Prozessor (32), Speicher (34), Software, eine Bedienungseinrichtung (36) und Display (38) aufweist und die Steuerung (30) so eingerichtet ist, dass in die gespeicherte Software der Steuerung (30) von einem Bediener mittels der Bedienungseinrichtung (36) oder über eine elektrische Schnittstelle der Parameterzahl (N) von Portionen (P) für einen letzten Haken (14) eingegeben wird (Parameter "Restfang").

9. Vorrichtung zum Bereitstellen von Portionen aus in einer Hülle bereitgestellter pastöser Lebensmittel-Masse, insbesondere Würstchen-Portionen, und zur Durchführung eines Verfahrens nach mindestens einem der vorstehenden Ansprüche mit
a) einem Portioniergerät (4) zum Bereitstellen von Portionen (P) aus in einer Hülle befindlicher pastöser Lebensmittel-Masse, welches Abteilbänder und einen Abteilband-Antrieb (24) und ein mittels eines Antriebs (18) antreibbares, rotierbares Looper-Rohr (16) aufweist, welches durch die Rotation verschiedene Orbitpositionen einnehmen kann und dazu ausgebildet ist, mehrere durch die Hülle miteinander verbundene Portionen (P) an eine Aufhängemaschine (6) zu übergeben,
b) einer Aufhängemaschine (6) zum Transportieren von mehreren Portionen (P), die mehrere Haken (14) aufweist zum Aufnehmen mehrerer durch die Hülle verbundener Portionen (P), wobei die Haken (14) mittels mindestens eines umlaufenden mittels eines Antriebs (26) antreibbaren Antriebselements (10) weiter transportiert werden können,
c) einer Steuerung (30) zum Steuern von Komponenten der Vorrichtung (1), **dadurch gekennzeichnet, dass**
die Steuerung (30) so ausgebildet und eingerichtet ist, dass mittels der Steuerung (30) mindestens der Antrieb (8) der Aufhängemaschine (6) und/oder Antrieb (18) des Looper-Rohrs (16) und/oder ein Abteilband-Antrieb (24) des Portioniergerätes (4) so gesteuert werden, dass von dem Portioniergerät (4) mittels des Looper-Rohrs (16) eine definierte Zahl (N) von Portionen (P) an einen letzten Haken (14) der Aufhängemaschine (6) zu Ende einer Produktionsphase übergeben wird.

10. Vorrichtung nach Anspruch 9,
**dadurch gekennzeichnet, dass** die Steuerung (30) mindestens einen Prozessor (32), Speicher (34), eine Bedienungseinrichtung (36) und Display (38) aufweist und die Steuerung (30) so eingerichtet ist, dass durch die gespeicherte Software der Steuerung (30) von einem Bediener mittels der Bedienungseinrichtung (36) oder über eine elektrische Schnittstelle der Betriebsmodus Restfang für den letzten Haken aktivierbar ist, so dass die Berechnung der Geschwindigkeit der Abteilbänder in Relation zur Looper-Orbitposition und in Abhängigkeit der Portionslänge und des Weges so durch die Steuerung angepasst wird, dass 2 Portionen an den letzten Haken (14) am Ende einer Produktionsphase übergeben werden.

11. Vorrichtung nach einem der Ansprüche 9 und 10,
**dadurch gekennzeichnet, dass** das Portioniergerät (4) zwei umlaufende, beabstandet zueinander angeordnete Abteilbänder (20, 22) und einen Abteilband-Antrieb (24) aufweist und von einer dem Portioniergerät (4) vorgeschalteten Füllmaschine (2) mit einem Abgaberohr (44) in einer Hülle befindliche Lebensmittel-Masse an das Portioniergerät (4) übergeben werden kann, und, dass am Ausgangsbereich des Portioniergeräts (4) das Looper-Rohr (16) angeordnet ist, um Portionen (P) in einer gewünschten Zahl pro Zeiteinheit und mit einem gewünschten Ziel-Gewicht an das Looper-Rohr (16) übergeben zu können,
und, dass auslassseitig hinter dem Looper-Rohr (16) die Haken (14) der Aufhängemaschine (6) so bewegt werden können, dass eine gewünschte Zahl (N) von Portionen (P) von dem Looper-Rohr (16) auf Haken (14) der Aufhängemaschine (6) übergeben werden können.
